# EUROPÄISCHE PATENTANMELDUNG

(11) **EP 0 921 049 A2**
(43) Veröffentlichungstag der Anmeldung: **09.06.1999**
(21) Anmeldenummer: 98122853.9
(22) Anmeldetag: 02.12.1998
(51) Int. Cl.: B60T 8/40, F16L 55/04, F15B 1/04

(54) **Schwingungsdämpfer zur Dämpfung von Flüssigkeitsschwingungen in Hydrauliksystemen**

(30) Priorität: 02.12.1997 DE 19753309
(71) Anmelder: Continental Teves AG & Co. oHG, 60488 Frankfurt (DE)
(72) Erfinder: Vogel, Gütnher, 63303 Dreieich (DE); Steffes, Helmut, 65795 Hattersheim (DE); Böing, Joachim, Lake Orion, Michigan 48360 (US)

(57) **Zusammenfassung**

Derartige Schwingungsdämpfer (1) sind typischerweise aus einem in einem Hydraulikflüssigkeit durchströmten Gehäuse (2) angeordneten Membrankörper (3) aufgebaut. Der Membrankörper (3) besteht aus einem Grundkörper (7), über den eine elastische gasdichte Membran (4) aufgezogen ist. Die Membran (4) hat die Funktion, zwei Kammern gasdicht voneinander zu trennen. Die eine Kammer ist mit dem Hydrauliksystem verbunden und wird dadurch mit Hydraulikflüssigkeit gespeist. Die andere Kammer ist mit Luft gefüllt, das annähernd Atmosphärendruck aufweist. Ist die Hydraulikflüssigkeit mit Druckpulsen beaufschlagt, können diese Druckpulse mittels der elastischen Membran, die sich gegen die atmende Luftkammer bewegt, gedämpft werden.

## Beschreibung

Die vorliegende Erfindung betrifft einen Schwingungsdämpfer zur Dämpfung von Flüssigkeitsschwingungen in Hydrauliksystemen gemäß dem Oberbegriff des Anspruchs 1.

Derartige Schwingungsdämpfer, die im Stand der Technik auch teilweise als Pulsationsdämpfer bezeichnet werden, sind in verschiedenen Ausführungsvarianten hinreichend bekannt. In der DE 195 24 920 wird ein Schwingungsdämpfer dahingehend beschrieben, daß eine gasdichte, verformbare Membran eine druckmittelgefüllte äußere Kammer von einer luftgefüllten mit nahezu atmosphärischem Umgebungsdruck beaufschlagten inneren Kammer trennt. Die luftgefüllte Kammer wird von einem Stützkörper begrenzt, welcher zwischen Membran und Stützkörper nur ein minimales Kammervolumen zuläßt und an dem sich die Membran bei Beaufschlagung durch Druckmittel anlegt. Die durch den Stützkörper begrenzte luftgefüllte Kammer ist so gestaltet, daß ein Luftaustausch mit der Atmosphäre möglich ist. Die im Druckmittel vorhandenen Druckpulse werden beim Auftreffen auf die elastische Membran und die dahinterliegende atmungsfähige Kammer weitgehend absorbiert und dadurch reduziert.

Aufgrund des minimalen Luftkammervolumens besteht die Gefahr, daß sich die Membran, die bei Druckmittelbeaufschlagung am Stützkörper anliegt, nicht mehr vom Stützkörper löst und die luftgefüllte Kammer somit ihre Atmungsfähigkeit verliert, wodurch die Fähigkeit Flüssigkeitsschwingungen in Hydrauliksystemen zu dämpfen verloren geht. Ein weiterer Nachteil von Schwingungsdämpfern mit geringem Luftkammervolumen besteht darin, daß Druckpulsationen mit im Vergleich zum Durchschnittsdruck erheblichen Druckspitzen nicht hinreichend abgedämpft werden können.

In einer weiteren Patentanmeldung unter dem Aktenzeichen 196 263 05.0 ist ein Schwingungsdämpfer der eingangs beschriebenen Art dargestellt, der ebenfalls aus einer inneren und einer äußeren Kammer aufgebaut ist. Die beiden Kammern werden auch hier mittels einer verformbaren, gasdichten Membran hermetisch voneinander getrennt.In dieser Anordnung des Schwingungsdämpfers ist allerdeings die innere Kammer mit Druckmittel gefüllt und die Aüßere Kammer mit der Atmosphäre verbunden. Die innere Kammer ist stützkörperfrei ausgeführt.

Aufgabe der vorliegenden Erfindung ist es, einen Schwingungsdämpfer der eingangs genannten Art zu schaffen, der in der Lage ist, ein breites Spektrum an Druckpulsen betriebssicher abzudämpfen.

Die Lösung dieser Aufgabe gelingt der Erfindung durch die Ausgestaltung der Vorrichtung nach Anspruch 1.

Die Erfindung baut hierzu einen Membrankörper auf, bei dem eine topfförmige Membran auf einen Grundkörper aufgezogen und dort befestigt ist. Die innere Kammer der topfförmigen Memrane bleibt hierbei weitestgehend stützkörperfrei frei. Der Grundkörper dient zur Stabilisierung der Membran, zur Lagede finition des Membrankörpers und dessen Befestigung in einem Aufnahmegehäuse.

Der Grundkörper des Membrankörpers kann auf verschiedene Weise ausgestaltet werden. Vorteilhafterweise ist er rotationssymmetrisch ausgeführt, wobei an seinem unteren Ende eine zu seiner Symmetrieachse radial nach außen orientierte Stufe angeformt ist.

Eine weitere vorteilhafte Ausführungsform stellt einen rotationssymmetrischen stufenlosen Grundkörper dar. Beide Varianten können mit einem oder mehreren Stützstegen versehen sein, die nach oben in die topfförmige Membrane hineinragen und ein Zusammenfallen der Membran bei Unterdruck in der inneren Kammer verhindern.

Die Membrane wird aus einem gasdichten elastischen Material hergestellt. Durch die Gasdichtheit wird gewährleistet, daß keine Hydraulikflüssigkeit durch die Membrane diffundiert. Die Elastizität der Membrane dient dazu, die durch die Hydraulikflüssigkeit aufgebrachten Druckimpulse aufzunehmen, sie an die dahinterliegende Luftkammer weiter zuleiten, wo sie durch die Atmungsfähigkeit der Kammer, die als Gummifeder wirkt, absorbiert und dadurch abgedämpfen werden.

An ihrer unteren Öffnung ist ein zu ihrer Symmetrieachse radial nach außen orientierter Wulst angeformt. Die Membrane ist so auf dem Grundkörper angeordnet, daß der Wulst entweder auf der Stufe des Grundkörpers aufsitzt oder bündig mit der Grundfläche des Grundkörpers abschließt. Die Dichtheit zwischen den durch die Membran getrennten Kammern wird dadurch erreicht, daß der Membrankörper in ein Gehäuse mit einer Stufenbohrung eingesetzt und der Wulst der Membrane zwischen der Stufe des Gehäuses oder der Stufe des Grundkörpers mittels Spannhülse eingepreßt wird. Durch das Einpressen des Membranwulstes wird dieser nach außen so aufgespreizt, daß er dicht an der Gehäusewand anliegt und dadurch die beiden durch die Membrane getrennten Kammern hermetisch voneinander trennt.

Die Spannhülse wird entweder durch Verstemmen oder Einclinchen direkt mit dem Gehäuse verbunden oder über einen Deckel, der ebenfalls verclincht oder verstemmt wird, in seiner Position fixiert und befestigt.

Vorteilhaferter Weise können diese Schwingungsdämpfer an jeder Position in den Druck- und Saugkanälen eines Hydraulikblocks angeordnet werden. Aufgrund ihres Aufnahmevolumens werden sie zusätzlich auch als Speicher eingesetzt.

Weitere ausgestaltende Merkmale und Vorteile der Erfindung ergeben sich anhand von drei in den Zeichnungen dargestellten Ausführungsbeispielen. Es zeigen:
- Fig. 1: einen Querschnitt durch einen Schwingungsdämpfer mit gestuftem Grundkörper,
- Fig. 2: einen Querschnitt durch einen Schwingungsdämpfer mit stufenlosem und mit Stützstegen ausgestatteten Grundkörper ,
- Fig. 3: eine Querschnitt durch einen flach bauenden Schwingungsdämpfer und
- Fig. 4: eine bevorzugte Position für den Einsatz von Schwingungsdämpfern.

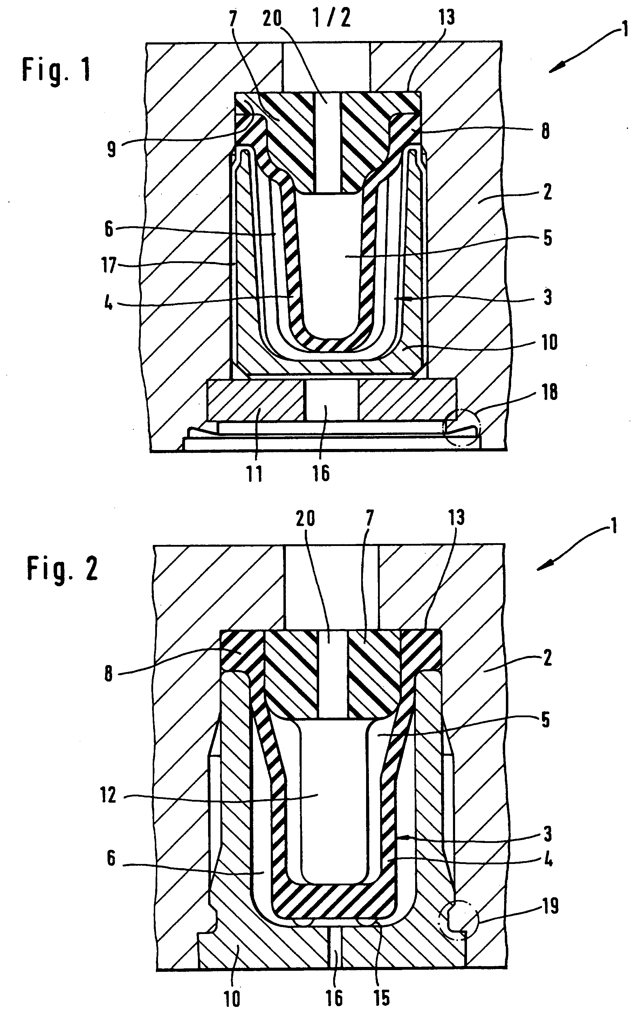

Fig. 1 zeigt einen Schwingungsdämpfer 1, bestehend aus einem Gehäuse 2, einem Membrankörper 3, einer Spannhülse 10 und einem Deckel 11. Der Membrankörper 3 ist aus einem Grundkörper 7 und aus einer elastischen Membran 4 aufgebaut. Der Grundkörper 7 ist als rotationssymmetrisches Teil mit einer zu seiner Symmetrieachse radial nach außen orientierten Stufe 9 ausgeführt.

Die topfförmige nach einer Seite hin offen ausgeformte Membran 4 besteht aus einem gasdichten und elastischen Material. Am offenen Ende der Membran 4 ist zu ihrer Symmetrieachse radial nach außen orientierter Wulst 8 angeformt. Die Membran 4 wird über den Grundkörper 7 so aufgezogen, daß der Wulst 8 der Membrane auf der Stufe 9 des Grundkörpers bündig aufsitzt.

Der Grundkörper ist zum Hydrauliksystem hin mit einer Bohrung 20 versehen, so daß die innere Kammer 5 des topfförmigen Membrankörpers 3 mit dem Hydrauliksystem verbunden ist und mit Hydraulikflüssigkeit gespeist wird.

Der Innenraum des Gehäuses 2 ist mit einer Stufe 13 ausgestattet, auf der der Membrankörper 3 aufgesetzt wird. Der Membrankörper 3 wird mittels einer Spannhülse 10 gegen die Stufe 13 verspannt. Die Spannhülse 10 preßt hierbei den Wulst 8 der Membran 4 auf die Stufe des Grundkörpers 7, wodurch sich der Wulst 9 nach außen gegen die Gehäusewand dehnt und die innere Kammer 5 gegen die äußere Kammer 6, das zwischen Membran und Gehäusewand liegt, hermetisch abdichtet. Das Gehäuse 2 wird mittels eines Deckels 11 verschlossen der gleichzeitig die Spannhülse 10 in ihrer Position fixiert. Der Deckel 11 ist mit einer Bohrung 16 ausgestattet, die über die Nuten 17 in der Spannhülse 10 eine Verbindung zwischen der äußeren Kammer 6 und der Umgebung herstellt.

In Fig. 2 ist ebenfalls ein Querschnitt eines Schwingungsdämpfers 1 dargestellt. Der Schwingungsdämpfer 1 ist auch hier aus einem Gehäuse 2, einem Membrankörper 3 und einer Spannhülse 10 aufgebaut.

Im Gegensatz zur Figur 1 wird die Spannhülse 10 nicht mittels eines Deckels 11 in ihrer Position im Gehäuse 2 fixiert, sondern direkt durch Verclinchen oder Verstemmen mit dem Gehäuse 2 verbunden.

Der Membrankörper 3 ist ebenfalls aus einem Grundkörper 7 und einer darüber gezogenen Membran 4 hergestellt. Der Grundkörper 7 ist hier stufenlos ausgeführt, so daß die Membran 4 bündig mit der Grundfläche des Grundkörpers 7 abschließt. Zusätzlich ist der Grundkörper 7 mit mindestens einem Stützsteg 12 ausgestattet, der von der oberen Fläche des Grundkörpers 7 in die topfförmige innere Kammer 5 der Membran 4 hineinragt.

Die Membrane 4 ist zusätzlich an ihrer Außenwand mit mindestens einer Stütznoppe 15 ausgestattet, die das Anlegen der Membran 4 an die Spannhülse 10 bei Druckbeaufschlagung verhindern.

Die in Fig. 1 und 2 dargestellten Schwingungsdämpfer 1 eignen sich insbesondere zur Anwendung in Bauräumen, deren Verhältnis Grundfläche zur Tiefe kleiner 1 beträgt.

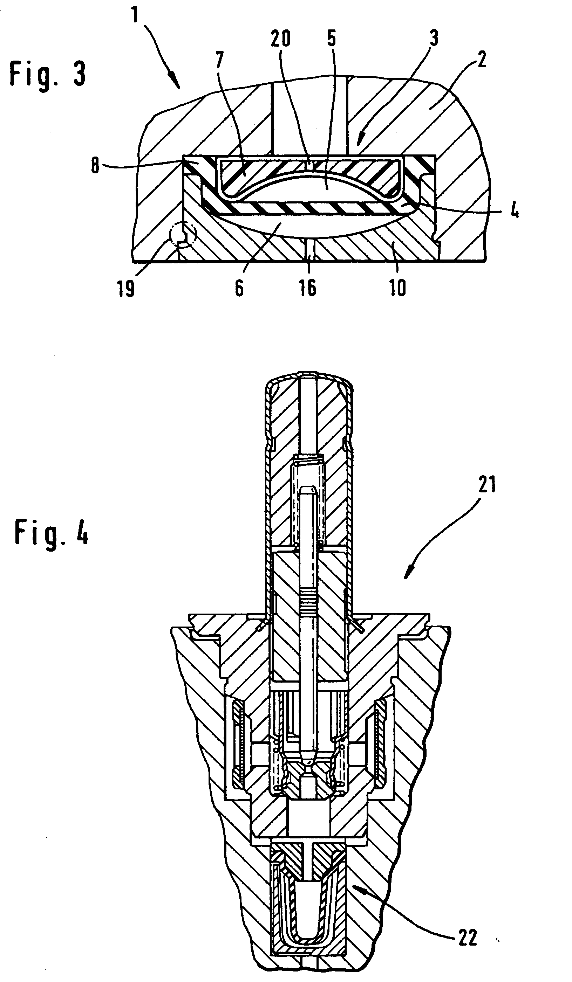

Der in Fig. 3 ausgearbeitet Schwingungsdämpfer 1, bietet ein Grundflächen-Tiefen-Verhältnis größer 1 und ist dadurch für den Einsatz in flachen Gehäusen prädestiniert.

Die in den Fig. 1, 2 und 3 aufgezeigten Ausführungsbeispiele können vorteilhafterweise als Kombination aller in den Figuren aufgezeigten Einzelteilen ausgeführt werden. So kann z.B. in jeder Ausführungsform der Grundkörper 7 mit oder ohne Stufe 9 als auch mit oder ohne Stützsteg 12 Verwendung finden. Ebenso kann das Gehäuse 2 mit einem Deckel 11 oder direkt mit der Spannhülse 10 verschlossen werden.

Fig.4 zeigt eine bevorzugte Einsatzposition der aufgezeigten Schwingungsdämpfer 1. Der Schwingungsdämpfer 22 ist hier in der Aufnahmebohrung eines Magnetventils 21 eines Motor-Pumpen-Aggregats am angeordnet. Er schließt im Hydraulikkanal an den Ausgang des Ventils an. Dadurch wird er beim geöffneten Ventiel mit Hydraulikflüssigkeit durchströmt und dient als Kammer zur Aufnahmekammer und zur Dämpfung der in der Flüssigkeit enthaltenen Druckpulse.

## Patentansprüche

1. Schwingungsdämpfer (1)zur Dämpfung von Flüssigkeitsschwingungen in Hydrauliksystemen mit folgenden Merkmalen:
- der Schwingungsdämpfer (1) ist in einem Gehäuse (2) eines Hydrauliksystems angeordnet und wird mit einer durch Druckpulsation beaufschlagten Hydraulikflüssigkeit durchströmt,
- der Schwingungsdämpfer (1) weist einen Membrankörper (3) auf, der mit einer elastischen Membran (4) versehen ist,
- die Membran (4) des Membrankörpers (3)trennt ein mit Hydraulikflüssigkeit gespeiste Kammer (5) hermetisch von einer mit der Atmosphäre verbundenen Kammer (6),
dadurch **gekennzeichnet**, daß der Membrankörper (3) aus einem Grundkörper (7) aufgebaut ist, über den eine Membran (4) aufgezogen ist.

2. Schwingungsdämpfer (1) nach Anspruch 1, dadurch **gekennzeichnet**,daß die mit Hydraulikflüssigkeit gespeiste Kammer (5) die innere Kammer und die mit der Atmosphäre verbundene Kammer (6) die äußere Kammer des Membrankörpers ist.

3. Schwingungsdämpfer (1) nach Anspruch 1, dadurch **gekennzeichnet**, daß die Membran (4) topfförmig ausgebildet ist und an ihrem offenen Ende einen zur ihrer Symmetrieachse radial nach außen orientierten Wulst (8) aufweist.

4. Schwingungsdämpfer (1) nach Anspruch 1 und 2, dadurch **gekennzeichnet**, daß der Grundkörper (7) an seinem unteren Ende eine zu seiner Symmetrieachse radial nach außen orientierte Stufe (9) aufweist.

5. Schwingungsdämpfer (1) nach Anspruch 1 und 2, dadurch **gekennzeichnet,** daß der Grundkörper (7) ein rotationssymmetrisches stufenloses Bauteil ist.

6. Schwingungsdämpfer (1) nach Anspruch 4 oder 5, dadurch **gekennzeichnet,** daß am oberen Ende des Grundkörpers (7) Stützstege (12) angeordnet sind.

7. Schwingungsdämpfer (1) nach einem oder mehreren der Ansprüche 3 bis 6, dadurch **gekennzeichnet,** daß der Wulst (8) der Membran (4) auf der Stufe (9) aufsitzt oder mit dem unteren Ende des stufenlosen Grundkörpers (7) abschließt.

8. Schwingungsdämpfer (1) nach einem oder mehreren der Ansprüche 1 bis 7, dadurch **gekennzeichnet,** daß das Gehäuse (2) eine Stufe (13) aufweist, auf die der Membrankörper (3) mit seiner Grundfläche aufgesetzt ist.

9. Schwingungsdämpfer (1) nach einem oder mehreren der Ansprüche 1 bis 8, dadurch **gekennzeichnet,** daß der Membrankörper (3) mittels einer Spannhülse (10), die den Wulst (8) der Membran (4) gegen die Stufe (13) des Gehäuses (2) oder des Grundkörpers (13,9) preßt, fixiert wird.

10. Schwingungsdämpfer (1) nach Anspruch 9,
dadurch **gekennzeichnet,** daß die Spannhülse (10) als Verschlußdeckel des Gehäuss (2) angeordnet ist.

11. Schwingungsdämpfer (1) nach Anspruch 9, dadurch **gekennzeichnet,** daß ein Deckel (11) die Spannhülse (10) in ihrer Position hält und das Gehäuse (2) verschließt.

12. Schwingungsdämpfer (1) nach einem oder mehreren der Ansprüche 1 bis 11, dadurch **gekennzeichnet,** daß die Membran (4) an ihrer Außenseite mit mindestens einem Stütznoppen (15) versehen ist.
